Europäisches Patentamt

European Patent Office

Office européen des brevets

(19)

(11) **EP 1 305 376 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(51) Int Cl.⁷: **C09J 5/06**, C08K 3/00, B29C 65/36

(21) Anmeldenummer: **01958019.0**

(22) Anmeldetag: **25.07.2001**

(86) Internationale Anmeldenummer:
**PCT/EP2001/008600**

(87) Internationale Veröffentlichungsnummer:
**WO 2002/012409 (14.02.2002 Gazette 2002/07)**

(54) **VERFAHREN ZUR BESCHLEUNIGTEN KLEBSTOFFAUSHÄRTUNG**

METHOD FOR ACCELERATING THE CURING OF ADHESIVES

PROCEDE D'ACCELERATION DU DURCISSEMENT D'ADHESIFS

(84) Benannte Vertragsstaaten:
**AT BE CH CY DE DK ES FI FR GB GR IE IT LI LU MC NL PT SE TR**

(30) Priorität: **03.08.2000 DE 10037884**

(43) Veröffentlichungstag der Anmeldung:
**02.05.2003 Patentblatt 2003/18**

(73) Patentinhaber: **Henkel Kommanditgesellschaft auf Aktien**
**40589 Düsseldorf-Holthausen (DE)**

(72) Erfinder: **KIRSTEN, Christian, N.**
**51399 Burscheid (DE)**

(56) Entgegenhaltungen:
**WO-A-99/03306        US-A- 5 338 611**
**US-A- 5 391 595      US-A- 5 925 455**

## Beschreibung

Die vorliegende Erfindung betrifft ein Verfahren zum Erwärmen von teilchengefüllten Klebstoffzusammensetzungen mit Hilfe eines elektrischen, magnetischen oder elektromagnetischen Wechselfeldes. Ein weiterer Gegenstand der vorliegenden Erfindung ist ein Verfahren zum Verkleben von metallischen und nicht metallischen Werkstoffen durch Erwärmen teilchengefüllter Klebstoffzusammensetzungen mit Hilfe der vorgenannten Wechselfelder.

In vielen Industriezweigen, insbesondere in der metallverarbeitenden Industrie wie z.B. der Fahrzeugindustrie, im Nutzfahrzeugbau sowie deren Zulieferindustrien oder auch bei der Herstellung von Maschinen und Haushaltsgeräten oder auch in der Bauindustrie werden zunehmend gleiche oder verschiedene metallische und nicht-metallische Substrate klebend bzw. abdichtend miteinander verbunden. Diese Art des Fügens von Bauteilen ersetzt in zunehmendem Maße die klassischen Fügeverfahren wie Nieten, Schrauben oder Schweißen, weil das Kleben/Abdichten eine Vielzahl von technologischen Vorteilen bietet. Dies ist insbesondere beim Fügen von Werkstoffen unterschiedlicher Zusammensetzung der Fall, wie beim Verbinden von metallischen Werkstoffen mit Kunststoffteilen und/oder Verbundwerkstoffen oder auch beim Verbinden unterschiedlicher metallischer Werkstoffe, z.B. Stahlbauteilen mit solchen aus Aluminium oder Magnesium.

Moderne Fertigungsverfahren im industriellen Bereich, insbesondere im Fahrzeugbau, erfordern, daß die verschiedenen gefügten Bauteile rasch weiterverarbeitet werden können. Ein prinzipieller Nachteil von reaktiven Klebstoffsystemen ist, daß für die Aushärtung dieser Klebstoffe und damit für einen Festigkeitsaufbau ein relativ langer Zeitraum benötigt wird. Bei Schmelzklebstoffen ist dieser prinzipielle Nachteil nicht so ausgeprägt vorhanden, nicht reaktive (nicht nachvernetzende) Schmelzklebstoffe sind jedoch nur in einem eingeschränkten Temperatur Beanspruchungsbereich einsetzbar, insbesondere wenn es um hochfeste Klebeverbindungen geht. Üblicherweise versucht man bei reaktiven Klebstoffen, den Aushärtungsprozeß durch Erwärmen sehr stark zu beschleunigen, so daß der Festigkeitsaufbau in einem kurzen Zeitintervall erfolgt. In konventioneller Weise wird dabei das gesamte bereits mit Klebstoff versehene und gefügte Bauteil erwärmt, dies geschieht in vielfältigster Weise, entweder in großen Öfen, durch Heizluftgebläse, durch direkte Einwirkung von Flammen oder durch Einwirkung von IR - Strahlern auf die Bauteile bzw. auf die Bereiche der Bauteile, die verklebt werden sollen. Insbesondere bei temperaturempfindlichen Bauteilen ist diese Vorgehensweise nicht möglich, so daß es wünschenswert ist, ein Verfahren bereit zu stellen, bei dem nur der Klebstoff selbst erwärmt wird. Eine derartige selektive Erwärmung des Klebstoffes ist im Prinzip bekannt. So beschreibt die WO 8809712 ein Verfahren zum zumindest teilweisen Aushärten von Dicht- und Klebemitteln, insbesondere bei der Direktverglasung von Kraftfahrzeugen durch Beaufschlagung zumindest eines Teilbereiches des Dichtund Klebemittels mit Mikrowellen-Energie.

Die Verwendung von Mikrowellenenergie zur Erwärmung von elektrisch nichtleitenden Materialien ist an sich bekannt, und eine umfassende Zusammenstellung dieser Technologie findet sich bei R.V. Decahau und R.A. Peterson, "Microwave Processing and Engineering", VCh Verlagsgesellschaft, 1986.

Auch die Verwendung von Mikrowellen zur Aushärtung von Polyurethansystemen, wie sie in Klebstoffzusammensetzungen vorkommen, ist im Prinzip bereits bekannt (US-PS 4 083 901). Bei diesen bekannten Verfahren zur Ausnutzung von Mikrowellenenergie werden jedoch die zu erwärmenden Substrate immer in großen abgeschlossenen Kammern, wie beispielsweise großen Öfen oder Bandtrocknern dem Mikrowellenfeld ausgesetzt. Eine Anwendung derartiger Verfahren ist jedoch nicht möglich, wenn Klebe- und Dichtungsstellen an großen und schwierigen Gütern, wie etwa Autoteilen oder ganzen Autokarosserien durchgeführt und dabei nur im Verhältnis zu der Gesamtabmessung des Bauteils sehr kleine Bereiche mit Mikrowellenenergie beaufschlagt werden sollen.

Die Menge der zuzuführenden Mikrowellenenergie zur Durchführung des teilweisen oder vollständigen Aushärtungsvorganges hängt von verschiedenen Faktoren, beispielsweise der Viskosität des eingesetzten Dicht- und Klebemittels sowie auch der Dicke der auszuhärtenden Schicht ab, und die zugeführte Menge an Mikrowellenenergie ist um so größer, je größer die Viskosität des Dicht- und Klebemittels und je geringer die Schichtdicke ist.

Zur Lösung dieser Probleme schlägt die WO-8809712 vor, die Mikrowellenenergie mit speziell ausgestalteten Strahlern impulsartig aufzubringen, wobei eine erste Impulsgruppe zugeführt wird, innerhalb der die Impulsamplituden abnehmen. Durch diese impulsartige Aufbringung der Mikrowellenenergie erfolgt zunächst eine verhältnismäßig hohe, jedoch kurzzeitige Energiezufuhr, so daß ein Teilbereich des Dicht- und Klebemittels erheblich erwärmt wird, ohne daß es zu Verbrennungs- oder Zersetzungserscheinungen kommt. Zwischen der Zufuhr des ersten Mikrowellenimpulses und der Zufuhr des folgenden Impulses einer zweiten Impulsgruppe kommt es innerhalb des Dicht- und Klebemittels durch Wärmeleitung zu einem Temperaturausgleich, so daß durch den nachfolgenden Impuls keine Überhitzung des zunächst relativ hoch erwärmten Bereichs des Dicht- und Klebemittels erfolgt. Wegen der bereits vorgenommenen Erwärmung durch den ersten Impuls und die dadurch erhöhte Temperatur des Dicht- und Klebemittels erfolgt danach die Zuführung einer geringeren Energiemenge, indem das Dicht- und Klebemittel mit Mikrowellenimpulsen mit abnehmenden Amplituden beaufschlagt wird. Dieses Verfahren hat in der Praxis jedoch gezeigt, daß die entsprechende Steuerung der Energiemenge aufwendig ist und seine Grenzen dort findet, wo extrem kurze Taktzeiten für das Fügeverfahren und damit für die Aushärtung zur Verfügung stehen.

**EP 1 305 376 B1**

Die EP - A 545033 beschreibt ein Verfahren zum Verbinden einer elektrischen Wicklung mit einem Eisenkern, insbesondere von Zündspulen, mit Hilfe eines durch Wärme aushärtbaren Klebers. Dort wird vorgeschlagen, daß sich die Wicklungen und Kern einem hochfrequenten Wechselfeld ausgesetzt werden, derart, daß sich die Wicklungen und der Kern erwärmen. Dadurch wird erreicht, daß sich die Einheit von Wicklungskörper und Kern schnell und gleichmäßig erwärmt, wodurch eine Aushärtung des Klebstoffes bewirkt wird. Dieses Verfahren ist jedoch nur auf die konstruktiven Gegebenheiten von speziellen elektrischen Bauteilen anwendbar.

Die EP-A-237657 beschreibt eine Methode zum Verbinden eines Teppichstreifens. Dazu soll die Klebstoffschicht ein Hochfrequenz Induktionspulver enthalten oder ein Klebstoffband soll eine elektrisch leitfähige Metallfolie enthalten. Es wird vorgeschlagen als leitfähige oder induktionsfähige Materialien pulverförmiges Eisen, Kobalt, Nickel, Aluminium, Kohlenstoff oder Graphit in einem hitzeempfindlichen Klebstoff einzubringen. Dabei sollen diese pulverförmigen Teilchen vorzugsweise eine flache blättchenartige Struktur haben um die Aufwärmung durch Induktionsheizung zu verkürzen.

Die US-A-5833795 beschreibt eine Methode zum Reparieren von Verbundmaterialien durch Verkleben eines Reparaturflickens auf dem aus einem Verbundmaterial bestehenden Produkt. Es wird vorgeschlagen einen Epoxid-Klebstoff zu verwenden, der magnetische Teilchen enthält, damit der Klebstoff bzw. das Epoxidharz durch elektromagnetische Anregung der Magnetteilchen ausgehärtet werden kann, konkret wird Mikrowellen - Aushärtung vorgeschlagen. Dazu müssten die magnetischen Teilchen wie Eisensilicid in Mengen von etwa 15 bis 20 Volumenprozent in dem Klebstoff vorhanden sein und diese Magnetteilchen müssen eine Curie-Temperatur innerhalb des Temperaturbereiches haben, der notwendig ist, um den Klebstoff auszuhärten.

Die WO-9805726 beschreibt eine Methode zum klebenden Verbinden von Gummikomponenten. Dazu wird vorgeschlagen, daß die zufügenden Oberflächen der Gummiteile neben eine speziellen Vorrichtung gelegt werden. Diese Vorrichtung enthält ein elektromagnetische Wellen absobierendes Zielelement das einen wärmeaktivierbaren Klebstoff berührt. Durch die elektromagnetischen Wellen wird das Zielelement aufgewärmt, um den Klebstoff zu aktivieren. Die zu verklebenden Oberflächen werden zusammengehalten und die Vorrichtung der elektromagnetischen Strahlung ausgesetzt, so daß ausreichende Wärme erzeugt wird um den Klebstoff zu aktivieren und eine Verbindung zwischen den Gummi-Teilen und der Arbeitsoberfläche zu erzeugen. Ein sehr ähnliches Gerät wird in der WO 9805728 beschrieben. Dort wird ausgeführt, daß diese Klebevorrichtung besonders effizient ist, wenn sie zwischen Bauteilen verwendet wird, die transparent für elektromagnetische Wellen sind.

Die WO 9851476 beschreibt ein Verfahren zur Ausbildung eines Leitsystems für Flüssigkeiten. Darin wird ein Verfahren zur Verbindung eines starren, thermoplastischen Gefäßes an eine flexible thermoplastische oder duroplastische, elastomere Leitung beschrieben, zu deren Herstellung eine elektromagnetische Verbindungstechnik verwendet wird. Dabei ist die flexible Leitung so ausgebildet, daß sie eine exakte Passung unter kompressiven Kräften an das starre Gefäß gewährleistet. Dazu wird ein elektromagentisch abbindender Klebstoff vor der Anwendung der elektromagnetischen Kräfte zwischen den Bauteilen angebracht. Dabei soll das Klebstoffmaterial ein thermoplastisches Material sein, das mindestens 60 Gewichtsprozent gleichmäßig verteilte elektromagnetische Energie absorbenden Teilchen enthält.

Gemäß Stand der Technik ist somit zwar bekannt, den Klebstoff mit Hilfe von elektromagnetischen Strahlungen auszuhärten, dabei werden zwei Wege beschrieben: einerseits werden der Klebstoffschicht benachbarte Vorrichtungen oder Substrate mit Hilfe der elektromagnetischen Strahlung erwärmt, andererseits werden den Klebstoffen elektromagnetische Strahlung absorbierende Partikel zugefügt, wobei dem Stand der Technik zu entnehmen ist, daß diese Strahlung absorbierenden Partikel in sehr hohen Prozentsätzen in die Klebstoffmatrix dispergiert sein müssen. Vielfach, insbesondere bei hochfesten Klebstoffen, beeinflussen derartig hohe Prozentsätze an Metallpulvern oder anderen, die elektromagnetische Energie absorbierenden, Partikel jedoch gravierend die Festigkeiten des so ausgehärteten Klebstoffes in negativer Weise.

Angesichts diese Standes der Technik haben sich die Erfinder die Aufgabe gestellt, Verfahren zu entwickeln, die die elektromagnetische Strahlung in effektiverer Weise in die zur Erwärmung des Klebstoffes notwendige Wärmeenergie umwandeln können und die die Klebstoffeigenschaften nicht in negativer Weise beeinflussen.

Die erfindungsgemäße Lösung der Aufgabe ist den Patentansprüchen zu entnehmen. Sie besteht im Wesentlichen in der Bereitstellung eines Verfahrens zur Erwärmung einer Klebstoffzusammensetzung mit Hilfe eines elektrischen, magnetischen oder elektromagnetischen Wechselfeldes,. wobei die Klebstoffzusammensetzung nanoskalige Teilchen mit superparamagnetischen oder piezoelektrischen Eigenschaften enthält, so daß sich bei Einwirkung der Strahlung die Klebstoffzusammensetzung so erwärmt, daß bei thermoplastischen Klebstoffen der Erweichungspunkt des thermoplastischen Bindemittels erreicht bzw. überschritten wird und bei reaktiven Klebstoffen eine Temperatur erreicht wird, die eine Vemetzung der Bindemittelmatrix über die reaktiven Gruppen des Bindemittels bewirkt.

Ein weiterer Gegenstand der vorliegenden Erfindung ist ein Verfahren zum Verkleben von nicht metallischen Werkstoffen und / oder Verbundwerkstoffen, das die folgenden wesentlichen Verfahrensschritte beinhaltet:

- Aufbringen der Klebstoffzusammensetzung, enthaltend nanoskalige Teilchen mit superparamagnetischen oder piezoelektrischen Eigenschaften, auf mindestens eine der zu fügenden Substratoberflächen, gegebenenfalls nach vorheriger Reinigung und/oder Oberflächenbehandlung

- Fügen der Bauteile
- Aushärten der Verklebung durch Erwärmen mit Hilfe einer elektromagnetischen Strahlung.

Ein weiterer Gegenstand der vorliegenden Erfindung betrifft ein ähnliches Verfahren zum Verkleben von metallischen Werkstoffen und / oder Verbundwerkstoffen beinhaltend die folgenden wesentlichen Verfahrensschritte:

- Aufbringen der Klebstoffzusammensetzung, enthaltend nanoskalige Teilchen mit superparamagnetischen oder piezoelektrischen Eigenschaften, auf mindestens eine der zu fügenden Substratoberflächen, gegebenenfalls nach vorheriger Reinigung und/oder Oberflächenbehandlung.
- Erwärmen der Klebstoffzusammensetzung mit Hilfe einer elektromagnetischen Strahlung.
- Fügen der Bauteile.

Dabei können die Verfahren zum Verkleben von Werkstoffen auch zweistufig ablaufen, wobei in einer ersten Stufe durch thermische Vorhärtung oder durch UV-Bestrahlung nur eine teilweise Aushärtung der Klebstoffmatrix erfolgt und in einem nachfolgenden Verfahrensschritt die vollständige Aushärtung durch die elektromagnetische Strahlung erfolgt. Andererseits kann dieses zweistufige Verfahren auch so gestaltet werden, daß in der ersten Stufe durch elektromagnetische Strahlung nur eine teilweise Aushärtung der Klebstoffmatrix erfolgt und in einem nachfolgenden Verfahrensschritt durch thermische Härtung, Feuchtigkeitshärtung oder durch UV-Bestrahlung die vollständige Aushärtung erfolgt.

"Nanoskalige Teilchen" im Sinne der vorliegenden Erfindung sind dabei Teilchen mit einer durchschnittlichen Teilchengröße (bzw. einem durchschnittlichen Teilchendurchmesser) von nicht mehr als 500 nm, vorzugsweise nicht mehr als 200 nm, besonders bevorzugt kleiner/gleich 100 nm und insbesondere nicht mehr als 50 nm. Dabei bedeutet Teilchengröße im Sinne dieser Definition Primärpartikelgröße. Die erfindungsgemäß ganz besonders bevorzugt einzusetzenden nanoskaligen Teilchen weisen eine mittlere Teilchengröße im Bereich von 1 bis 100 nm, besonders bevorzugt zwischen 3 und 50 nm auf. Für die besonders effektive Ausnutzung der durch Superparamagnetismus bewirkten Effekte sollten die Teilchengrößen nicht mehr als 50 nm betragen. Die Teilchengröße wird dabei bevorzugt nach der UPA-Methode (Ultrafine Particle Analyzer) bestimmt, z. B. nach dem Laser-Streulicht-Verfahren ("laser light back scattering"). Um eine Agglomeration oder ein Zusammenwachsen der nanoskaligen Teilchen zu verhindern oder zu vermeiden, sind diese üblicherweise oberflächenmodifiziert bzw. oberflächenbeschichtet. Ein derartiges Verfahren zur Herstellung agglomeratfreier nanoskaliger Teilchen ist am Beispiel von Eisenoxidteilchen in der DE-A-196 14 136 in den Spalten 8 bis 10 angegeben. Einige Möglichkeiten zur oberflächlichen Beschichtung derartiger nanoskaliger Teilchen zur Vermeidung einer Agglomeration sind in der DE-A-197 26 282 angegeben.

Zur Energieeintragung eignen sich elektrische Wechselfelder oder magnetische Wechselfelder. Bei der Anwendung elektrischer Wechselfelder sind als Füllmaterialien alle piezoelektrischen Verbindungen geeignet, z. B. Quarz, Turmalin, Bariumtitanat, Lithiumsulfat, Kaliumtartrat, Natriumtartrat, Kalium-Natriumtartrat, Ethylendiamintartrat, Ferroelektrika mit Perowskitstruktur und vor allem Blei-Zirkonium-Titanat. Bei der Verwendung von magnetischen Wechselfeldern eignen sich grundsätzlich alle super-paramagnetischen Stoffe, insbesondere die Metalle Aluminium, Cobalt, Eisen, Nickel oder deren Legierungen sowie Metalloxide vom Typ n-Maghemit ($\gamma$-$Fe_2O_3$), n-Magnetit ($Fe_3O_4$), Ferrite von der allgemeinen Formel $MeFe_2O_4$, wobei Me für zweiwertige Metalle aus der Gruppe Mangan, Kupfer, Zink, Cobalt, Nickel, Magnesium, Calcium oder Cadmium steht.

Bei der Verwendung magnetischer Wechselfelder eignen sich insbesondere nanoskalige superparamagnetische Teilchen, sogenannte "single-domain-particle". Im Vergleich zu den vom Stand der Technik bekannten paramagnetischen Partikeln zeichnen sich die nanoskaligen Füllstoffe dadurch aus, daß solche Materialien keine Hysterese aufweisen. Dies hat zur Folge, daß die Energiedissipation nicht durch magnetische Hystereseverluste hervorgerufen wird, sondern die Wärmeerzeugung vielmehr auf eine während der Einwirkung eines elektromagnetischen Wechselfeldes induzierte Schwingung oder Rotation der Teilchen in der umgebenden Matrix und somit letztlich auf mechanische Reibungsverluste zurückzuführen ist. Dies führt zu einer besonders effektiven Erwärmungsrate der Teilchen und der sie umgebenden Matrix.

Gegenüber den klassischen Erwärmungsmethoden zeichnet sich das erfindungsgemäße Verfahren insbesondere dadurch aus, daß durch die lokal definierte Wärmeerzeugung eine thermische Belastung der verklebten Substrate selbst vermieden wird. Außerdem ist das Verfahren sehr zeitsparend und effektiv, da keine Wärmediffusion durch die Klebesubstrate nötig ist. Hierdurch werden auch unter Umständen nicht unerhebliche Wärmeverluste vermieden, wodurch das erfindungsgemäße Verfahren besonders ökonomisch ist.

Wenn es darum geht, die vorbeschriebenen Effekte zur Klebstoffaushärtung in besonders kostengünstiger Weise durchzuführen, hat es sich bewährt, solche ferromagnetischen Eisenoxide und Mischoxide zu verwenden, die ursprünglich für die elektromagnetischen Speichermedien wie Magnetbänder und Disketten entwickelt wurden, da diese in großem Umfange technisch in kostengünstiger Weise produziert werden können und zur Verfügung stehen. Diese Metalloxide haben üblicherweise Teilchendurchmesser von 200 nm bis zu 1000 nm und können ebenfalls in erfindungsgemäßer Weise eingesetzt werden.

Als Bindemittelmatrix für die erfindungsgemäß zu verwendenden Klebstoffe können im Prinzip alle für Klebstoffe geeignete Polymere eingesetzt werden. Beispielhaft erwähnt seien für die thermoplastisch erweichbaren Klebstoffe die Schmelzklebstoffe auf der Basis von Ethylen-Vinylacetatcopolymeren, Polybutene, Styrol-Isopren-Styrol- bzw. Styrol-Butadien-Styrolcopolymere, thermoplastische Elastomere, amorphe Polyolefine, lineare, thermoplastische Polyurethane, Copolyester, Polyamidharze, Polyamid/EVA-Copolymere, Polyaminoamide auf Basis von Dimerfettsäuren, Polyesteramide oder Polyetheramide. Weiterhin eignen sich prinzipiell die bekannten Reaktionsklebstoffe auf der Basis ein- bzw. zweikomponentiger Polyurethane, ein- oder zweikomponentiger Polyepoxide, Silikonpolymere (ein- bzw. zweikomponentig), silanmodifizierte Polymere, wie sie beispielsweise bei G. Habenicht, "Kleben: Grundlagen, Technologie, Anwendungen", 3. Auflage, 1997 im Kapitel 2.3.4.4 beschrieben werden. Die (Meth)acrylat-funktionellen Reaktionskleber auf der Basis peroxidischer Härter, anaerober Härtungsmechanismen, aerober Härtungsmechanismen oder UV-Härtungsmechanismen eignen sich ebenfalls als Klebstoffmatrix.

Weiterhin eignenen sich Bindemittel auf der Basis von 1-oder 2-komponentigen reaktiven Kautschuke, wie sie beispielsweise in der EP-A- 356715, der DE-A-19502381, der DE-A-19518673 oder DE-A-19730425 offenbart werden. Weiterhin läßt sich dieses Verfahren auf die Aushärtung von Kleb-/Dichtstoffen oder Versiegelungsmassen auf der Basis von PVC-Homo- oder Copolymeren, (Meth)-acrylat-homo-oder Copolymeren oder Styrolcopolymeren und Weichmachern anwenden. Wenn die Klebstoffe bei besonders niedrigen Temperaturen effektiv und schnell ausgehärtet werden sollen, lassen sich insbesondere auch die 1-komponentigen Polyurethansysteme verwenden, die als Reaktivpartner flüssige oder leicht aufschmelzbare Polyole oder aminoterminierte Prepolymere enthalten, in denen feste, Oberflächen-desaktiverte Polyisocyanate eindispergiert sind. Derartige Oberflächen-desaktiverte Polyisocyanatsysteme sind beispielsweise in der EP-A-922720, der US-A-5710215, der EP-A-598873, der EP-A-671423, der EP-A-417540, der EP-A-510476, der EP-A-212511 oder der EP-A-131903 offenbart worden.

Von den letztgenannten Bindemitteln eignen sich insbesondere Dispersionen auf der Basis von festen Derivaten des Toluylendiisocyanates (TDI) wie z.B. TDI-Uretdion oder TDI-Hamstoffpulver oder Trimere des Isophorondiisocyanates (IPDI).

Derartige Oberflächen-desaktiverte Polyisocyanate sind pulverförmig, haben Schmelzpunkte zwischen 95 und 145 °C und Teilchengroßen zwischen etwa 1μm und etwa 30μm, wobei die 50 %-Mittelwerte der Teilchengrößenverteilung bei 8μm oder 2μm liegen. Vorteil dieser micronisierten festen Diisocyanate ist, daß sie in Kohlenwasserstoffen, vielen Polyolen und Weichmachern bei tiefen Temperaturen praktisch unlöslich sind, so daß sie darin dispergiert werden können und mit geeigneten Aminen Oberflächen-desaktiviert werden können.

Als Dispergiermittel eignen sich vorzugsweise Polyole die bei Raumtemperatur flüssige, glasartig fest/amorphe oder kristalline Polyhydroxyverbindungen sind und zwei bzw. drei Hydroxylgruppen pro Molekül im Molekulargewichtsbereich von 400 bis 20000, vorzugsweise im Bereich von 1000 bis 6000 haben. Beispiele sind diund/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethem sind die Polytetramethylenglykole (Poly(oxytetramethylen)glycol, Poly-THF), die z.B. durch die saure Polymerisation von Tetrahydrofuran hergestellt werden, dabei liegt der Molekulargewichtsbereich der Polytetramethylenglykole zwischen 600 und 6000, vorzugsweise im Bereich von 800 bis 5000.

Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure,Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-dodecandiol, Dimerfettalkohol, Glycerin, Trimethylolpropan oder deren Mischungen hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-polyole und Dimerdiole (Fa. Henkel) sowie Rizinusöl und dessen Derivate. Auch die Hydroxyfunktionellen Polybutadiene, wie sie z.B. unter dem Handelsnamen "Poly-bd" erhältlich sind, können für die erfindungsgemäßen Zusammensetzungen als Polyole eingesetzt werden.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestem mit hydroxyfunktionellen Acrylsäure- und/oder Methacrylsäure-Verbindungen wie Hydroxyethyl(meth)acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden. Dabei sollen die festen Polyole eine Schmelzbereich unter 70 °C, vorzugsweise unter 50 °C haben und im geschmolzenen Zustand eine niedrige Viskosität aufweisen, besonders bevorzugt sind jedoch bei Raumtemperatur flüssige Polyole.

An Stelle von oder gemeinsam mit den vorgenannten Polyolen können eine Vielzahl von Tri- oder Polyaminen mit verwendet werden, bevorzugt werden jedoch aminoterminierte Polyalkylenglykole, insbesondere die trifunktionellen aminoterminierten Polypropyleneglykole, Polyethylenglykole oder Copolymere von Propylenglykol und Ethylenglykol. Diese sind auch unter dem Namen "Jeffamine" (Handelsname der Firma Huntsman) bekannt. Weiterhin besonders geeignet sind die trifunktionellen aminoterminierten Polyoxytetramethylenglycole, auch Poly-THF genannt. Außerdem sind aminoterminierte Polybutadiene geeignet, sowie Aminobenzoesäureester von Polypropylenglykolen, Polyethylenglykolen oder Poly-THF (bekannt unter dem Handelsnamen "Versalink oligomeric Diamines" der Firma Air Products). Die aminoterminierten Polyalkylenglykole oder Polybutadiene haben Molekulargewichte zwischen 400 und 6000.

Als Energie zur Erwärmung der nanoskalige Teilchen enthaltenden Klebstoffe eignet sich prinzipiell jedes höherfrequente elektromagnetische Wechselfeld: so lassen sich beispielsweise elektromagnetische Strahlungen der sog. ISM-Bereiche (industrial, scientific and medical application) einsetzen, nähere Angaben hierzu finden sich unter anderem bei Kirk-Othmer, "Encyclopedia of Chemical Technology", 3. Auflage, Band 15, Kapitel "Microwave technology".

Es war bereits weiter oben darauf hinwiesen worden, daß bei der Verwendung von nanoskaligen Teilchen im Sinne dieser Erfindung die elektromagnetische Strahlung in besonders effektiver Weise ausgenutzt werden kann. Dies zeigt sich besonders deutlich daran, daß bereits im sehr niederfrequenten Bereich von etwa 50 kHz oder 100 kHz bis hinauf zu 100 MHz nahezu jede Frequenz verwendet werden kann, um eine zur Spaltung der Klebeverbindungsmatrix notwendige Wärmemenge in der Klebstoffmatrix zu erzeugen. Die Auswahl der Frequenz kann sich dabei nach den zur Verfügung stehenden Geräten und verwendeten Signalempfängern richten, wobei selbstverständlich dafür Sorge getragen werden muß, daß Störfelder nicht abgestrahlt werden.

Nachfolgend soll die Erfindung anhand einiger Prinzipversuche dargestellt werden, wobei die Auswahl der Beispiele keine Beschränkungen des Umfanges des Erfindungsgegenstandes darstellen soll, sie zeigen nur in modellhafter Weise die Wirkungsweise der erfindungsgemäßen Klebstoffzusammensetzungen.

**Beispiele**

Die Untersuchungen zum Einfluß der nanoskaligen Teilchen auf thermische Klebstoffe wurden auf der Basis dreier kommerziell von der HENKEL KGaA erhältlicher thermoplastischer Schmelzklebstoffe durchgeführt. Hierbei handelte es sich um einen normalen Ethylenvinylacetat-basierten Klebstoff (Technomelt Q 3118, EVA1), und zwei Polyamid-basierte Klebstoffe mit mittlerer (Macromelt 6208, PA1), bzw. hoher (modifiziertes Polyamid PA2) Wärmebeständigkeit. Eine Auswahl charakteristischer Klebe- bzw. Werkstoffeigenschaften der unmodifizierten Klebstoffe sind der Tabelle 1 zu entnehmen.

Tabelle 1

| Beispiel | Klebstoff | WSF [°C] | ZSF (Holz/Holz) [MPa] | ZSF (PVC/PVC) [MPa] |
|---|---|---|---|---|
| 1 | EVA1 | 53 | 2,40 | 2,25 |
| 2 | PA1 | 124 | 2,92 | 3,41 |
| 3 | PA2 | 153 | 6,67 | 3,86 |

Zur Bestimmung der Wärmestandfestigkeit (WSF) der Verklebungen wurden zwei mit einem Loch versehene Probekörper aus Buchenholz bzw. PVC mit den Maßen 100 x 25 x 4 mm auf einer Fläche von 20 x 25 mm mit dem Klebstoff verklebt und etwa 24 h bei Raumtemperatur gelagert. Die verklebten Probekörper wurden anschließend in einem Umlufttrockenschrank (Heraeus UT 5050 EK) aufgehängt und mit einem Gewicht von 1365 g belastet. Hierauf wurde folgendes Temperaturprogramm durchlaufen:

1. Start bei 25°C,

2. in 10 min von 25°C auf 50°C aufheizen,

3. über 5 h von 50°C auf 200°C aufheizen,

4. 20 min bei 200°C halten und

5. innerhalb 20 min auf 25°C abkühlen.

Mittels eines Mikroprogrammgebers (DEP 1131) wurde die Zeit in Sekunden angezeigt, in der die Verklebung reißt. Die WSF wurde nach der Formel berechnet:

$$\text{WSF } [°C] = [((\text{gemessene Zeit in sec}) - 600) / 120] + 50.$$

Die Zugscherfestigkeit (ZSF) wurde in Anlehnung an die DIN 53283 bestimmt. Dabei wurden Probekörper aus Buchenholz bzw. PVC mit den Maßen 100 x 25 x 4 mm auf einer Fläche von 20 x 25 mm mit den Klebstoffen verklebt und nach etwa 24 Stunden im Zugversuch (Zwick Universalprüfmaschine 144501) untersucht.

Die vorstehend beschriebenen Klebstoffe wurden mit unterschiedlichen Gehalten an nanoskaligem Magnetit modifiziert. Der verwendete Magnetit wurde dabei zum Teil zur besseren Anpassung an die polymere Klebstoffmatrix oberflächenmodifiziert. Die in der Tabelle 2 angegebenen Teilchengrößen wurden mittels UPA-Messungen (UPA=Ultra Fine Particle Analyser) bestimmt. Die Kristallitgrößen der Magnetite wurden mittels Röntgenstrukturanalyse mit 8 nm bestimmt.

Tabelle 2

| Bezeichnung | Modifizierung | Mittlere Teilchengröße |
|---|---|---|
| MA | Keine | 50 nm |
| MA-MPTS | Methacrylgruppen | 50 nm |
| MA-AEA | Epoxydgruppen | 50 nm |

Die in Tabelle 2 aufgeführten Magnetite wurden in unterschiedlichen Füllgraden in die in Tabelle 1 beschriebenen Klebstoffe eindispergiert. Die Eigenschaften einiger ausgewählter mit 20 Gew-% modifizierter Formulierungen sind in der Tabelle 3 zusammengefaßt.

Tabelle 3

| Beispiel | Klebstoff/Füllstoff | WSF [°C] | ZSF (Holz/Holz) [MPa] | ZSF (PVC/PVC) [MPa] |
|---|---|---|---|---|
| 4 | EVA1 + 20% MA | 51 | 3,55 | 2,98 |
| 5 | PA1 + 20% MA-MPTS | 132 | 3,33 | 3,53 |
| 6 | PA2 + 20% MA | 169 | 4,88 | 2,29 |
| 7 | PA2 + 20% MA-MPTS | 169 | 3,86 | 2,51 |
| 8 | PA2 + 20% MA-AEA | 169 | 4,37 | 1,74 |

Aus den vorstehenden Beispielen 4 bis 8 wird deutlich, daß selbst bei hoch mit nanoskaligem Magnetit gefüllten Klebstoff die Wärmestandfestigkeit nicht negativ beeinflußt wird. Bei dem Polyamid-basierten Klebstoff hoher Wärmebeständigkeit PA2 sind Menge der Magnetitteilchen und das Oberflächenmodifizierungsmittel aufeinander und auf das zu verklebende Substrat abzustimmen, wenn sehr hohe Zugscherfestigkeiten erreicht werden sollen.

Beispiel 9: Einfluß der "Signalempfänger"-Partikelgröße auf die induktive Erwärmbarkeit modifizierter Klebstoffe:

Grundsätzlich eigenen sich zur induktiven Erwärmung polymerer Matrizes neben nano-skaligen "Signalempfängern" auch solche größerer Partikelgröße. Aufgrund eines an dieser Stelle nicht näherer zu beschreibenden anderen Aufwärmmechanismus ist jedoch die eintragbare Energiemenge bei der Verwendung nanoskaliger Füllstoffe erheblich größer als bei der Verwendung größerer Partikel. Dies wird durch entsprechende Untersuchungen, die beispielhaft an einem modifizierten Polyester-System (Dynacoll 7360, Fa. Hüls) durchgeführt wurden, deutlich. Zur Erzeugung des benötigten magnetischen Wechselfeldes wurde ein Gerät der Fa. Hüttinger (TIG 5/300) verwendet. Die angelegte Spannung betrug 180V. Die verwendete Spule wies einen Durchmesser von 3,5 cm und 10 Windungen auf. Die verwendete Spule war dabei Bestandteil des schwingungserzeugenden Schwingkreises. Bei den angegebenen Spannungen und Dimensionen der Spule ergab sich eine Frequenz von etwa 250 kHz. Aus dem Beispiel 10 und dem Vergleichsbeispiel wird deutlich, daß bei der Verwendung von nanoskaligen Füllstoffen als "Signalempfänger" in der Klebstoffmatrix die Erwärmung des modifizierten Polyesters in sehr viel kürzerer Zeit zu sehr viel höheren Temperaturen erfolgt als bei den "gröberen" Magnetit-Teilchen. Die Ergebnisse der Untersuchungen sind in der Tabelle 4 zusammengefaßt.

Tabelle 4

| Zeit [sek] | Beispiel 10 Nano-Magnetit Temperatur [°C] | Vergleich Sub-$\mu$-Magnetit Temperatur [°C] |
|---|---|---|
| 0 | 20,4 | 18 |
| 5 | 25,9 | 20,3 |
| 10 | 34,7 | 24,1 |
| 15 | 41,2 | 27,5 |
| 20 | 46 | 30,9 |
| 25 | 48,1 | 35,1 |
| 30 | 49,9 | 38,3 |
| 35 | 50,7 | 41,1 |
| 40 | 52,4 | 43,4 |
| 45 | 62,6 | 45,2 |
| 50 | 75,1 | 46,9 |
| 55 | 85 | 47,9 |
| 60 | 93,5 | 48,7 |
| 70 | 108 | 50,5 |
| 80 | 118 | 52,4 |
| 90 | 124,9 | 66,2 |
| 100 | | 82 |

Beispiel 10: Einfluß des "Signalempfänger"-Füllgrades auf die induktive Erwärmbarkeit modifizierter Klebstoffe:

Das Aufwärmverhalten modifizierter Klebstoffe im magnetischen Wechselfeld ist stark von dem Füllgrad des verwendeten Signalempfängers abhängig. Entsprechende Untersuchungen wurden am Beispiel des Magnetit-modifizierten EVA1 durchgeführt. Zur Erzeugung des benötigten magnetischen Wechselfeldes wurde ein Gerät der Fa. Hüttinger (TIG 5/300) verwendet. Die angelegte Spannung betrug 180V. Die verwendete Spule wies einen Durchmesser von 3,5 cm und 10 Windungen auf. Die Ergebnisse der Untersuchungen sind in der Tabelle 5 zusammengefaßt.

Tabelle 5

| Beispiel | Füllgrad n-Magnetit [Gew.%] | Zeit bis zum Erreichen des Schmelzpunktes (80°C) [s] |
|---|---|---|
| 11 | 5 | 89 |
| 12 | 10 | 42 |
| 13 | 15 | 27 |
| 14 | 20 | 20 |

Aus den Beispielen 11 bis 14 wird deutlich, daß mit steigendem Füllgrad an nanoskaligem Magnetit die notwendige Aufheizzeit unter sonst gleichen Bedingungen drastisch verkürzt wird.

Beispiel 15: Einfluß der Stärke des magnetischen Wechselfeldes auf die induktive Erwärmbarkeit modifizierter Klebstoffe:

Bei der induktiven Erwärmung Magnetit-modifizierter Klebstoffe spielt die Stärke des applizierten Magnetfeldes eine entscheidende Rolle. Hierbei ist die resultierende Stärke des Feldes innerhalb der Spule u.a. von der angelegten Spannung bzw. dem fließenden Strom abhängig. Es wurden Untersuchungen zum Einfluß unterschiedlicher
Spannungen mit einem Gerät der Fa. Hüttiger (TIG 5/300) durchgeführt. Die maximal anzulegende Spannung betrug
180V. Die verwendete Spule hatte einen Durchmesser von 3,5 cm und wies 10 Windungen auf. Als Klebstoff wurde
die Zusammensetzung gemäß Beispiel 8 verwendet. Die Ergebnisse sind in der Tabelle 6 zusammengefaßt.

Tabelle 6

| Zeit [s] | Erwärmungstemperatur [°C] bei U = [V] | | | | | | | | | |
|---|---|---|---|---|---|---|---|---|---|---|
|  | **18V** | **36V** | **54V** | **72V** | **90V** | **108V** | **126V** | **144V** | **162V** | **180V** |
| 0 | 23,8 | 23,3 | 24,1 | 24,7 | 24 | 22,7 | 25,1 | 25,7 | 21,6 | 22,3 |
| 20 | 23,9 | 23,3 | 26,6 | 29 | 35,1 | 36,5 | 47 | 54,7 | 52,5 | 65 |
| 40 | 23,7 | 24 | 29,6 | 34,5 | 45 | 50,2 | 64,6 | 79,3 | 78,5 | 98,7 |
| 60 | 24,1 | 24,9 | 32,7 | 39,1 | 53,3 | 61 | 80,6 | 98,5 | 99,8 | 121 |
| 80 | 24,8 | 25,7 | 35,1 | 44,4 | 60,3 | 71 | 95 | 114 | 118,1 | 140,6 |
| 100 | 24,6 | 26,3 | 37,6 | 48,8 | 68,5 | 81 | 106 | 126 | 134,6 | 155,5 |
| 120 | 25,3 | 26,5 | 39,9 | 52,2 | 75 | 88 | 116 | 140 |  | 170 |
| 140 | 25,1 | 27,4 | 42,1 | 56 | 80,5 | 97 | 125 | 148 |  | 178 |
| 160 | 25,8 | 28 | 44,4 | 58,8 | 85,6 | 102,8 | 133,6 | 155 |  | 191 |
| 180 | 25,7 | 28,1 | 46 | 62 | 91 | 109 | 140 | 159 |  | 198 |

Aus den Meßwerten der Tabelle 6 wird deutlich, daß mit wachsender Feldstärke (d. h. mit wachsender angelegter Spannung) die Geschwindigkeit der Erwärmung der Klebstoffmatrix stark zunimmt, so daß in sehr kurzer Zeit
Temperaturen erreicht werden, die ausreichen, um die Klebstoffmatrix aufzuschmelzen und so zwei Substrate fügen
und verkleben zu können.

Beispiel 16: Einfluß der Spulengeometrie auf die induktive Erwärmbarkeit modifizierter Klebstoffe:

Außer von der angelegten Spannung ist die Feldstärke des magnetischen Wechselfeldes auch von der Länge
bzw. Windungsanzahl der verwendeten Spule abhängig. Je nach Spulenlänge bzw. Windungsanzahl resultiert bei
konstanter Spannung ein Feld unterschiedlicher Frequenz bzw. Stärke. Entsprechende Untersuchungen wurden bei
konstant maximaler Spannung von 180V durchgeführt. Als Klebstoffbasis diente der mit 20 Gew-% Magnetit modifizierte PA2. Die verwendeten Spulen wiesen einen konstanten Durchmesser von 3,5 cm auf und unterschieden sich in
der Windungsanzahl. Die Ergebnisse dieser Untersuchungen sind in Tabelle 7 zusammengefaßt.

Tabelle 7

| t [s] | T [°C] *Spule mit 10 Windungen* | T [°C] *Spule mit 4 Windungen* |
|---|---|---|
| 0 | 22,3 | 21,2 |
| 10 |  | 95 |
| 20 | 65 | 137 |
| 30 |  | 162 |
| 40 | 99 | 179 |
| 50 |  | 198 |
| 60 | 121 | 215 |
| 70 |  | 226 |

Tabelle 7   (fortgesetzt)

| t [s] | T [°C] *Spule mit 10 Windungen* | T [°C] *Spule mit 4 Windungen* |
|---|---|---|
| 80 | 140 | |
| 100 | 155 | |
| 120 | 170 | |
| 140 | 178 | |
| 160 | 191 | |
| 180 | 198 | |
| 200 | -- | |
| 220 | | |
| 240 | | |

Die in Tabelle 7 zusammengefaßten Ergebnisse zeigen, daß bei geringerer Spulenlänge bzw. Windungsanzahl und daraus resultierender höherer Feldstärke die Aufheizrate bei gleicher Klebstoffzusammensetzung signifikant ansteigt.

Zur Klärung, inwiefern die induktive Erwärmung zu einer Veränderung der Klebstoffeigenschaften führt, wurden Versuche vorgenommen, bei denen ein mit 20 Gew-% Magnetit modifizierter PA2 mehrmals induktiv erwärmt wurde. Für die Untersuchungen wurde wiederum ein Gerät der Fa. Hüttinger (TIG 5/300) verwendet. Die angelegte Spannung betrug 180V. Die verwendete Spule wies einen Durchmesser von 3,5cm und 10 Windungen auf. Zusammenfassend läßt sich feststellen, daß das Aufwärmverhalten des modifizierten Klebstoffs auch nach mehrmaliger Erwärmung im magnetischen Wechselfeld nahezu unbeeinflußt blieb.

Bei thermoplastischen Klebstoffen läßt sich also die Erwärmung und damit die Verklebung der Substrate reversibel gestalten, so daß die verklebten Teile mehrfach zusammengefügt und wieder gelöst werden können, falls dies erforderlich ist.

Zur Aushärtung eines 1-komponentigen reaktiven Klebstoffes wurde ein 1-komponentiger thermisch härtbarer Polyurethanklebstoff der Firma Henkel Teroson GmbH verwendet (Terolan 1500). Hierbei handelt es sich um einen Polyurethanklebstoff auf Basis von Polyolen, Jeffaminen, Katalysatoren und einem darin dispergierten Oberflächendesaktivierten TDI - Dimer. In nachfoldenden Beispielen wurde der unmodifizierte Klebstoff mit " TcPU" bezeichnet. Dieser Klebstoff wurde mit unterschiedlichen Gehalt an nanoskalaren n-Magnetit modifiziert. Holz/Holz-Klebeverbunde aus derartig modifiziertem Klebstoff wurden im magnetischen Wechselfeld ausgehärtet. Hierbei zeigt sich, daß die Aushärtegeschwindigkeit stark abhängig von der Frequenz und Feldstärke des verwendeten Magnetfeldes, sowie von der Klebstoffschichtdicke ist. Als Feldgenerator diente ein Gerät der Fa. Hüttinger mit der Typbezeichnung TIG 5/300. Die angelegte Spannung betrug 100 % der maximal mit dem verwendeten Gerät möglichen Leistung (180 V). Für das "schwache" Magnetfeld wurde eine Spule mit 10 Windungen, für das "starke" Magnetfeld eine Spule mit 4 Windungen verwendet. Eine Auswahl der Ergebnisse ist in den Tabellen 8-10 zusammengefaßt. Die Klebstoffdicke betrug jeweils 500 µm.

Tabelle 8:

| Aushärtung in "schwachen" magnetischen Wechselfeld | | | |
|---|---|---|---|
| **Beispiel** | **Klebstoff** | **Aushärtezeit [min:sek]** | **ZSF [N/mm²]** |
| 15 | TcPU + 10 Gew % n-Magnetit | 2:30 | 3,95 |
| 16 | TcPU + 10 Gew % n-Magnetit | 5:00 | 4,59 |
| 17 | TcPU + 10 Gew % n-Magnetit | 12:00 | 5,64 |

Tabelle 9:

| Aushärtung im "starken" magnetischen Wechselfeld | | | |
|---|---|---|---|
| **Beispiel** | **Klebstoff** | **Aushärtezeit [min:sek]** | **ZSF [N/mm²]** |
| 18 | TcPU + 5 Gew % n-Magnetit | 0:40 | 2,20 |

Tabelle 9:   (fortgesetzt)

| Aushärtung im "starken" magnetischen Wechselfeld | | | |
|---|---|---|---|
| **Beispiel** | **Klebstoff** | **Aushärtezeit [min:sek]** | **ZSF [N/mm$^2$]** |
| 19 | TcPU + 5 Gew % n-Magnetit | 1:00 | 4,04 |
| 20 | TcPU + 5 Gew % n-Magnetit | 1:20 | 4,68 |

Tabelle 10:

| Vergleichsexperiment : Aushärtung im Ofen bei 100 °C | | |
|---|---|---|
| **Klebstoff** | **Aushärtezeit [min:sek]** | **ZSF [N/mm$^2$]** |
| TcPU + 10 Gew % n-Magnetit | 30:00 | 4,75 |

Aus den Beispielen 15 bis 20 wird deutlich, daß ein derartiger thermisch härtbarer reaktiver Klebstoff auch bei geringen Mengen an Magnetit in sehr kurzer Zeit ausgehärtet werden kann und dabei sehr hohe Zugscherfestigkeiten erreichen kann, die die Zugscherfestigkeiten weit übersteigen können, die mit herkömmlicher Aushärtung im Ofen bei gleicher Klebstoffzusammensetzung erzielt werden. Insbesondere wird aus diesen Versuchen deutlich, daß bei dem erfindungsgemäßen Verfahren der Aushärtung mit Hilfe von elektromagnetischer Strahlung die Aushärtezeit des Klebstoffes drastisch reduziert werden kann. Damit sinkt auch die thermische Belastung der zu verklebenden Substrate.

**Patentansprüche**

1. Verfahren zum Erwärmen einer Klebstoffzusammensetzung mit Hilfe eines elektrischen, magnetischen oder elektromagnetischen Wechselfeldes, **dadurch gekennzeichnet, daß** die Klebstoffzusammensetzung, enthaltend nanoskalige Teilchen mit superparamagnetischen oder piezoelektrischen Eigenschaften, sich erwärmt und dabei

   - bei thermoplastischen Klebstoffen Ober den Erweichungspunkt des thermoplastischen Bindemittels erwärmt wird
   - bei reaktiven Klebstoffen auf eine Temperatur erwärmt wird, die eine Vemetzung der Bindemittelmatrix über die reaktiven Gruppen des Bindemittels bewirkt.

2. Verfahren nach Anspruch 1, **dadurch gekennzeichnet, daß** die nanoskaligen Teilchen eine durchschnittliche Teilchengröße zwischen 1 und 500 nm, vorzugsweise von kleiner oder gleich 200 nm, besonders bevorzugt Kleiner/gleich 100 nm und ganz besonders bevorzugt kleiner/gleich 50 nm haben.

3. Verfahren nach Anspruch 1 oder 2, **dadurch gekennzeichnet, daß** die nanoskaligen Teilchen aus piezoelektrischen Stoffen ausgewählt aus Quarz, Turmalin, Bariumtitanat, Lithiumsulfat, Kaliumtartrat, Natriumtartrat, Kalium-Natriumtartrat, Ethylendiamintartrat, ferroelektrischen Verbindungen mit Perowskitstruktur oder Blei-Zirkonium-Titanat aufgebaut sind.

4. Verfahren nach Anspruch 1 oder 2, **dadurch gekennzeichnet, daß** die nanoskaligen Teilchen aus super-paramagnetischen Stoffen ausgewählt werden aus Aluminium, Cobalt, Eisen, Nickel oder deren Legierungen, Metalloxiden vom Typ des n-Maghemits ($\gamma$-Fe$_2$O$_3$), n-Magnetits (Fe$_3$O$_4$) oder der Ferrite vom Typ des MeFe$_2$O$_4$, wobei Me ein zweiwertiges Metall ausgewählt aus Mangan, Kupfer, Zink, Cobalt, Nickel, Magnesium, Calcium, Cadmium ist.

5. Verfahren nach Anspruch 1 bis 4, **dadurch gekennzeichnet, daß** sie die nanoskaligen Stoffe nach mindestens einem der vorhergehenden Ansprüche in einer Menge von 1 bis 30 Gew.%, vorzugsweise von 2 bis 20 Gew.% bezogen auf die Gesamtzusammensetzung enthält.

6. Verfahren nach Anspruch 1 bis 5 **dadurch gekennzeichnet, daß** das auf die Klebstoffzusammensetzung eingestrahlte elektrische, magnetische oder elektromagnetische Wechselfeld eine Frequenz zwischen 50 kHz und 300 GHz hat.

**7.** Verfahren nach Anspruch 6 **dadurch gekennzeichnet, daß** die Frequenz zwischen 50 kHz und 300 MHz, vorzugsweise zwischen 500 kHz und 50 MHz liegt

**8.** Verfahren nach Anspruch 6 **dadurch gekennzeichnet, daß** die Frequenz zwischen 300 MHz und 300 GHz, vorzugsweise zwischen 1 GHz und 10 GHz liegt

**9.** Verfahren nach Anspruch 1, **dadurch gekennzeichnet, daß** die thermoplastische Klebstoffzusammensetzung auf der Basis von Ethylen-Vinylacetatcopolymeren, Polybutenen, Styrol-Isopren-Styrol- bzw. Styrol-Butadien-Styrolcopolymeren, thermoplastischen Elastomeren, amorphen Polyolefinen, linearen, thermoplastischen Polyurethanen, Copolyestern, Polyamidharzen, Polyamid/EVA-Copolymeren, Polyaminoamiden auf Basis von Dimerfettsäuren, Polyesteramiden, Polyetheramiden oder Plastisolen auf der Basis von PVC-Homound/oder -Copolymeren, (Meth)acrylat- Homo- und/oder -Copolymeren oder Styrol- Copolymeren und Weichmachern aufgebaut ist

**10.** Verfahren nach Anspruch 1, **dadurch gekennzeichnet, daß** die reaktive Klebstoffzusammensetzung auf der Basis von ein- bzw. zweikomponentigen Polyurethanen, ein- oder zweikomponentigen Polyepoxiden, Silikonpolymeren, silanmodifizierten Polymeren, ein- bzw. zweikomponentigen reaktiven Kautschuken oder einkomponentigen Polyurethanen mit Oberfächendesaktivierten, festen Polyisocyanaten aufgebaut ist

**11.** Verfahren zum Verkleben von nichtmetallischen Werkstoffen und/oder Verbundwerkstoffen **gekennzeichnet durch** die folgenden wesentlichen Verfahrensschritte

- Aufbringen der Klebstoffzusammensetzung, enthaltend nanoskalige Teilchen mit superparamagnetischen oder piezoelektrischen Eigenschaften, auf mindestens eine der zu fügenden Substratoberflächen, gegebenenfalls nach vorheriger Reinigung und/oder Oberflächenbehandlung
- Fügen der Bauteile
- Aushärten der Verklebung **durch** Erwärmen mit Hilfe einer elektromagnetischen Strahlung nach Anspruch 5 bis 8.

**12.** Verfahren zum Verkleben von metallisctien Werkstoffen und/oder Verbundwerkstoffen **gekennzeichnet durch** die folgenden wesentlichen Verfahrensschritte

- Aufbringen der Klebstoffzusammensetzung, enthaltend nanoskalige Teilchen mit superparamagnetischen oder piezoelektrischen Eigenschaften, auf mindestens eine der zu fügenden Substratoberflächen, gegebenenfalls nach vorheriger Reinigung und/oder Oberflächenbehandlung
- Erwärmen der Klebstoffzusammensetzung mit Hilfe einer elektromagnetischen Strahlung nach Anspruch 5 bis 8.
- Fügen der Bauteile.

**13.** Verfahren nach Anspruch 11 oder 12, **dadurch gekennzeichnet**, das die Aushärtung zweistufig erfolgt, wobei in einer ersten Stufe durch thermische Vorhärtung oder durch UV-Bestrahlung nur eine teilweise Aushärtung der Klebstoffmatrix erfolgt und in einem nachfolgenden Verfahrensschritt die vollständige Aushärtung durch elektromagnetische Strahlung nach Anspruch 5 bis 8 erfolgt.

**14.** Verfahren nach Anspruch 11 oder 12, **dadurch gekennzeichnet**, das die Aushärtung zweistufig erfolgt, wobei in einer ersten Stufe durch elektromagnetische Strahlung nach Anspruch 5 bis 8 nur eine teilweise Aushärtung der Klebstoffmatrix erfolgt und in einem nachfolgenden Verfahrensschritt durch thermische Härtung, Feuchtigkeifshärtung oder durch UV-Bestrahlung die vollständige Aushärtung erfolgt

**Claims**

**1.** A process for heating an adhesive composition by an electrical, magnetic or electromagnetic alternating field, **characterized in that** the adhesive composition containing nanoscale particles with superparamagnetic or piezoelectric properties heats up and,

- in the case of thermoplastic adhesives, is heated beyond the softening point of the thermoplastic binder,
- in the case of reactive adhesives, is heated to a temperature at which the binder matrix is crosslinked via the reactive groups of the binder.

2. A process as claimed in claim 1, **characterized in that** the nanoscale particles have a mean particle size of 1 to 500 nm, preferably of 200 nm or smaller, more preferably of 100 nm or smaller and most preferably of 50 nm or smaller.

3. A process as claimed in claim 1 or 2, **characterized in that** the nanoscale particles consist of piezoelectric materials selected from quartz, tourmaline, barium titanate, lithium sulfate, potassium tartrate, sodium tartrate, potassium sodium tartrate, ethylenediamine tartrate, ferroelectric materials of perovskite structure and lead zirconium titanate.

4. A process as claimed in claim 1 or 2, **characterized in that** the nanoscale particles of superparamagnetic materials are selected from aluminium, cobalt, iron, nickel or alloys thereof, metal oxides of the n-maghemite type ($\gamma$-$Fe_2O_3$) and the n-magnetite type ($Fe_3O_4$) or ferrites with the general formula $MeFe_2O_4$, where Me stands for a divalent metal selected from manganese, copper, zinc, cobalt, nickel, magnesium, calcium or cadmium.

5. A process as claimed in claims 1 to 4, **characterized in that** the nanoscale materials claimed in at least one of the preceding claims are present in a quantity of 1 to 30% by weight and preferably in a quantity of 2 to 20% by weight, based on the composition as a whole.

6. A process as claimed in claims 1 to 5, **characterized in that** the electrical, magnetic or electromagnetic alternating field to which the adhesive composition is exposed has a frequency of 50 kHz to 300 GHz.

7. A process as claimed in claim 6, **characterized in that** the frequency is between 50 kHz and 300 MHz and preferably between 500 kHz and 50 MHz.

8. A process as claimed in claim 6, **characterized in that** the frequency is between 300 MHz and 300 GHz and preferably between 1 GHz and 10 GHz.

9. A process as claimed in claim 1, **characterized in that** the thermoplastic adhesive composition is based on ethylene/vinyl acetate copolymers, polybutenes, styrene/isoprene/styrene or styrene/butadiene/styrene copolymers, thermoplastic elastomers, amorphous polyolefins, linear thermoplastic polyurethanes, copolyesters, polyamide resins, polyamide/EVA copolymers, polyaminoamides based on dimer fatty acids, polyester amides, polyether amides or plastisols based on PVC homopolymers and/or copolymers, (meth)acrylate homo- and/or copolymers or styrene copolymers and plasticizers.

10. A process as claimed in claim 1, **characterized in that** the reactive adhesive composition is based on on one- or two-component polyurethanes, one- or two-component polyepoxides, silicone polymers, silane-modified polymers, one or two-component reactive rubbers or one-component polyurethanes with surface-deactivated, solid polyisocyanates.

11. A process for bonding non-metallic materials and/or composite materials comprising the following key steps:

   • applying the adhesive composition containing nanoscale particles with superparamagnetic or piezoelectric properties to at least one of the substrate surfaces to be joined, optionally after cleaning and/or surface treatment
   • fitting the substrates together
   • curing the bond by heating with electromagnetic radiation as claimed in claims 5 to 8.

12. A process for joining metallic materials and/or composite materials comprising the following key steps:

   • applying the adhesive composition containing nanoscale particles with superparamagnetic or piezoelectric properties to at least one of the substrate surfaces to be joined, optionally after cleaning and/or surface treatment
   • heating the adhesive composition by electromagnetic radiation as claimed in claims 5 to 8
   • fitting the substrates together.

13. A process as claimed in claim 11 or 12, **characterized in that** curing take places in two stages: in a first stage, the adhesive matrix is only partly cured by thermal precuring or by UV radiation and, in a following process step, is fully cured by electromagnetic radiation as claimed in claims 5 to 8.

**14.** A process as claimed in claim 11 or 12, **characterized in that** curing takes place in two stages: in a first stage, the adhesive matrix is only partly cured by electromagnetic radiation as claimed in claims 5 to 8 and, in a following process step, is fully cured by heat curing, moisture curing or UV radiation.

**Revendications**

**1.** Procédé pour chauffer une compositiona dhésive à l'aide d'un champ alternatif électrique, magnétique ou électromagnétique, **caractérisé en ce que** la composition adhésive, contenant des particules d'une taille à l'échelle du nanomètre avec des propriétés superparamagnétiques ou piézoélectriques, se réchauffe,e t

- dans le cas d'adhésifs thermoplastiques, elle est réchauffée à une température au-dessus du point de ramollissement du liant thermoplastique
- dans le cas d'adhésifs réactifs, elle est réchauffée à une température qui provoque une réticulation de la matrice de liant via les groupes réactifs du liant.

**2.** Procédé selon la revendication 1, **caractérisé en ce que** lesp articules d'une taille à l'échelle du nanomètre présentent une grosseur moyenne des particules entre 1 et 500 nm, de préférence inférieure ou égale à 200 nm, de manière particulièrement préférée inférieure ou égale à 100 nm et de manière toutà faitp référée inférieure ou égale à 50 nm.

**3.** Procédé selon la revendication 1 ou 2, **caractérisé en ce que** les particules d'une taille à l'échelle du nanomètre sont élaborées à partir de substances piézoélectriques choisies parmi le quartz, la tourmaline, le titanate de baryum, le sulfate de lithium, le tartrate de potassium, le tartrate de sodium, le tartrate de potassium et de sodium, le tartrate d'éthylènediamine, les composés ferroélectriques avec une structure de pérowskite ou le titanate de plomb etd e zirconium.

**4.** Procédé selon la revendication 1 ou 2, **caractérisé en ce que** les particules d'une taille à l'échelle du nanomètre en substances superparamagnétiques sont choisies parmi l'aluminium, le cobalt, le fer, le nickel ou leurs alliages, les oxydes de métal du type de la n-maghémite ($\gamma$-Fe$_2$O$_3$), la n-magnétite (Fe$_3$O$_4$) ou des ferrites du type MeFe$_2$O$_4$, Me étant un métal divalent choisi parmi le manganèse, le cuivre, le zinc, le cobalt, le nickel, le magnésium, le calcium, le cadmium.

**5.** Procédé selon la revendication 1 à 4, **caractérisé en ce que** ladite composition contient les substances d'une taille à l'échelle du nanomètre selon au moins l'une quelconque des revendications précédentes en une quantité de 1 à 30% en poids, de préférence de 2 à 20% en poids par rapportà la composition totale.

**6.** Procédé selon la revendication 1 à 5, **caractérisé en ce que** le champ alternatif électrique, magnétique ou électromagnétique irradié sur la composition adhésive présente une fréquence entre 50 kHz et 300 GHz.

**7.** Procédé selon la revendication 6, **caractérisé en ce que** la fréquence est située entre 50 kHz et 300 MHz, de préférence entre 500 kHz et 50 MHz.

**8.** Procédé selon la revendication 6, **caractérisé en ce que** la fréquence est située entre 300M Hz et 300 GHz,d e préférence entre 1 GHz et10 GHz.

**9.** Procédé selon la revendication 1, **caractérisé en ce que** la composition adhésive thermoplastique est élaborée à base de copolymères d'éthylène et d'acétate de vinyle, de polybutènes, de copolymères de styrène-isoprène-styrène ou de styrène-butadiène-styrène, d'élastomères thermoplastiques, de polyoléfines amorphes, de polyuréthannes linéaires thermoplastiques, de copolyesters, de résines polyamide, de copolymères de polyamide/EVA, de polyaminoamides à base d'acides gras dimères, de polyesteramides, de polyétheramides ou de plastisols à base d'homopolymères et/ou de copolymères de PVC, d'homopolymères et/ou de copolymères de (méth)acrylate ou de copolymères de styrène et de plastifiants.

**10.** Procédé selon la revendication 1, **caractérisé en ce que** la composition adhésive réactive est élaborée à base de polyuréthannes à un ou deux composants, de polyépoxydes à un ou deux composants, de polymères de silicone, de polymères modifiés par silane, de caoutchoucs réactifs à un ou deux composants ou de polyuréthannes à un composant avec des polyisocyanates solides à surface désactivée.

**11.** Procédé pour coller des matériaux et/ou de composites non métalliques, **caractérisé par** les étapes de procédé essentielles suivantes :

- application de la composition adhésive, contenantd es particules d'une taille à l'échelle du nanomètre avec des propriétés superparamagnétiques ou piézoélectriques, sur au moins une des surfaces des substrats à assembler, le cas échéant après nettoyage et/ou traitement de surface préalable,
- assemblage des pièces,
- durcissement du collage par chauffage à l'aide d'un rayonnement électromagnétique selon la revendication 5 à 8.

**12.** Procédé pour coller des matériaux et/ou des composites métalliques **caractérisé par** les étapes de procédé essentielles suivantes :

- application de la composition adhésive, contenantd es particules d'une taille à l'échelle du nanomètre avec des propriétés superparamagnétiques ou piézoélectriques, sur au moins uned es surfaces des substrats à assembler, le cas échéant après nettoyage et/ou traitement de surface préalable
- chauffage de la composition adhésive à l'aide d'un rayonnement électromagnétique selon la revendication 5 à 8,
- assemblage des pièces.

**13.** Procédé selon la revendication 11 ou 12, **caractérisé en ce que** le durcissement est réalisé en deux étapes, en ne réalisant dans une première étape qu'un durcissement partiel de la matrice de l'adhésif par un prédurcissement thermique ou un rayonnement UV et le durcissement complet étant réalisé dans une étape de procédé consécutive par rayonnement électromagnétique selon la revendication 5 à 8.

**14.** Procédé selon la revendication 11 ou 12, **caractérisé en ce que** le durcissement est réalisé en deux étapes, en ne réalisant dans une première étape qu'un durcissement partiel de la matrice d'adhésif par rayonnement électromagnétique selon la revendication 5 à 8 et le durcissement complet étant réalisé dans une étape de procédé consécutive par durcissement thermique, durcissement sous l'effet de l'humidité ou rayonnement UV.